# FASCICULE DE BREVET EUROPEEN

(11) **EP 1 883 575 B1**
(45) Date de publication et mention de la délivrance du brevet: **28.07.2010**
(21) Numéro de dépôt: 06743817.6
(22) Date de dépôt: 20.04.2006
(51) Int. Cl.: B62M 9/08, B62M 3/00

(54) **DISPOSITIF DE TRANSMISSION DE MOUVEMENT DE PEDALAGE SUR DES CYCLES POUR DEPLACEMENT OU ENTRAINEMENT**
ZUM FAHREN ODER ZUM TRAINING VERWENDETE VORRICHTUNG ZUR ÜBERTRAGUNG EINER PEDALBEWEGUNG AUF FAHRRÄDERN
DEVICE FOR TRANSMITTING A PEDALLING MOVEMENT ON CYCLES USED FOR TRAVEL OR TRAINING

(30) Priorité: 27.04.2005 FR 0551099
(43) Date de publication de la demande: 06.02.2008
(73) Titulaire: Gregoire, Claude, 37230 Luynes (FR)
(72) Inventeur: Gregoire, Claude, 37230 Luynes (FR)
(74) Mandataire: Dupuis, François
(86) Numéro de dépôt international: PCT/FR2006/050359
(87) Numéro de publication internationale: WO 2006/114539

(56) Documents cités:
- DE-A1- 2 752 964
- DE-A1- 10 051 931
- DE-U1- 8 430 305
- FR-A- 2 313 253
- FR-A- 2 766 251
- FR-A- 2 828 474
- GB-A- 449 504
- US-A- 3 492 883
- US-A- 4 124 107
- US-A- 4 154 123
- US-A- 4 183 262
- US-A1- 2003 051 572

## Description

L'invention se rattache au secteur technique des dispositifs de transmission de mouvement de pédalage sur des cycles, bicyclettes, et aussi des vélos d'appartement, d'entraînement et/ou de rééducation à position fixe en salle.

Traditionnellement, la transmission des mouvements de pédalage sur des bicyclettes, quelle qu'en soit leur utilisation, s'effectue par un dispositif incluant un pédalier avec un ou plusieurs pignons, coopérant en transmission avec une chaîne montée sur un pignon ou dérailleur en roue arrière. Dans l'application du vélo d'entraînement, en salle de musculation, chez le masseur kinésithérapeute ou chez soi, généralement les vélos ont un système simplifié avec une seule possibilité d'entraînement. Pour les bicyclettes permettant de faire des parcours, les dérailleurs permettent d'adapter la force de pédalage à la difficulté du parcours en faisant varier le développement de la chaîne sur un tour de pédalage.

On connaît ainsi par le brevet français 2313253 un dispositif de transmission de mouvement de pédalage selon le préambule de la revendication 1 comprenant un pédalier elliptique avec une chaîne entraînant un système d'engrenages pour tendre la chaîne. C'est un système à trois entrées, courroie actionnée par deux poulies, deux chaînes actionnées par des poulies à engrenage et des galets de tension. Le système à chaîne n'est pas extensible.

On connaît par le brevet US 3492883 un système de transmission par chaîne avec pédalier circulaire et cliquet permettant un passage des vitesses à l'arrêt.

Ces dispositifs restent complexes à mettre en oeuvre.

Différentes recherches ont été menées pour améliorer les performances des bicyclettes et l'utilisation de plateaux elliptiques a été proposée.

Le problème posé à l'origine de l'invention est celui de la difficulté de démarrage au pédalage, qui est en particulier rencontrée pour les enfants, et aussi adolescents ou adultes qui n'ont guère d'entraînement.

Par ailleurs, les vélos pour enfants fonctionnent pratiquement tous avec une chaîne, qui est un moyen de transmission dangereux. Les fabricants doivent alors protéger les pignons avec une coque de protection, et ce, pour respecter les normes de sécurité qui deviennent de plus en plus drastiques.

On a constaté aussi qu'en plus de la difficulté de démarrage, l'enfant avait ensuite du mal à contrôler sa vitesse de pédalage en allant trop vite et pédalant dans le vide.

Pour les vélos d'entraînement et de rééducation, il faut en plus pour l'utilisateur vaincre l'inertie des moyens de freinage qui servent à amplifier l'effort physique de pédalage.

L'objectif recherché par l'invention était donc de trouver une solution qui facilite l'action de démarrage du pédalage en réduisant les efforts à engendrer, aussi bien pour des vélos dits de course, de ville, tous terrains, et des vélos d'appartement ou de rééducation comme exposé précédemment.

Selon un autre objectif de l'invention, il fallait que la mise en oeuvre soit simple et peu coûteuse, tout en respectant les règles de sécurité variables selon les applications.

L'aspect coût était aussi important si l'on considère maintenant les coûts de vente des bicyclettes et vélos en tous genres et pour toutes applications dans les circuits de distribution, en grande surface par exemple, où le critère coût est un paramètre majeur pour le consommateur.

La solution apportée par le Demandeur répond aux objectifs précités et offre à l'utilisateur, quelle que soit l'application donnée, en vélo de course, de ville, tous terrains, vélo d'appartement, vélo de rééducation ou d'entraînement, un meilleur confort de pédalage et une assistance complète au début du cycle de pédalage.

Selon une première caractéristique de l'invention, le dispositif de transmission de mouvement de pédalage pour le déplacement ou entraînement, du type mettant en oeuvre un plateau elliptique relié au pédalier par un moyen de transmission, est caractérisé en ce qu'il comprend en combinaison un plateau elliptique à l'avant du cycle relié au pédalier par un système de roue libre, ce qui permet à l'utilisateur de choisir l'angle d'inclinaison entre les pédales et le grand axe du plateau elliptique, un plateau circulaire arrière avec roue libre et une courroie de transmission qui réalise la liaison et l'entraînement entre lesdits plateaux, la courroie ayant une capacité élastique de déformation et d'extension, le dispositif étant agencé pour permettre la mise à niveau automatique du plateau avant elliptique en position à l'horizontale et donc l'équilibre lorsque l'utilisateur cesse de pédaler.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique du dispositif de l'invention.
- la figure 1a illustre le plateau avant de configuration elliptique selon la figure 1.
- la figure 1b illustre le plateau arrière de configuration classique circulaire selon la figure 1.
- la figure 2 est une vue à caractère schématique du dispositif dans la configuration où les pédales sont à l'horizontale.
- la figure 3 est une vue à caractère schématique du dispositif où la poulie elliptique est à l'horizontale.
- la figure 4 est une vue à caractère schématique du dispositif en phase de démarrage du pédalage, étant représentée également la position d'un plateau circulaire selon l'art antérieur et par comparaison.
- la figure 5 illustre selon la figure 4 la position, des pédales et du dispositif après un quart de tour.
- les figures 6a, 6b sont des vues illustrant le dispositif en situation d'arrêt de pédalage et sa mise en position en vue de faciliter ultérieurement un nouvel effort de pédalage pour redémarrer.
- la figure 7 illustre la remise en position des pédales en vue d'un redémarrage.

Afin de rendre plus concret l'objet de l'invention, on le décrit maintenant d'une manière non limitative illustrée aux figures des dessins.

Le dispositif de transmission de mouvement de pédalage est référencé dans son ensemble par (D) et trouve de nombreuses applications, ainsi que rappelé précédemment. Dans la suite de la description, on utilisera le terme général « bicyclette » qui inclut toutes les applications précitées.

Le dispositif est remarquable en ce qu'il met en oeuvre en combinaison un plateau elliptique à l'avant de bicyclette relié au pédalier par une roue libre avant, un plateau circulaire arrière avec roue libre également et une courroie de transmission, le dispositif étant ainsi agencé pour permettre la mise à niveau automatique du plateau avant elliptique en position à l'horizontale et donc l'équilibre lorsque l'utilisateur cesse de pédaler.

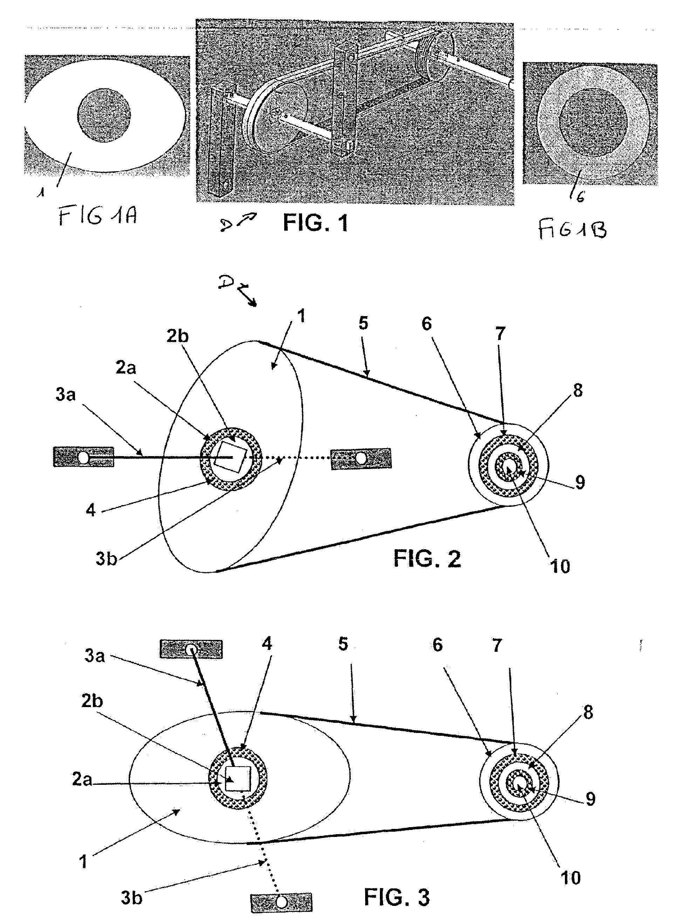

Plus particulièrement, le plateau elliptique (1) est relié au pédalier (2) par un système de roue libre (4), ce qui permet à l'utilisateur de choisir l'angle d'inclinaison entre les pédales (3a-3b) et le grand axe (AA) du plateau elliptique. Le pédalier (2) comprend une tige transversale (2a) sur laquelle est vissée la roue libre (4) et deux embouts à section carrée (2b) sur lesquels sont positionnées les pédales (3a-3b). Tout montage équivalent relevant de la pratique usuelle de l'homme de métier peut être mis en oeuvre. Sur la figure 2 qui illustre le dispositif à caractère schématique, on a représenté de manière symbolique le pédalier (3a-3b).

Le plateau arrière circulaire (6) est relié au moyeu de roue (8) par un second système de roue libre (7). Le moyeu est relié à la tige transversale (10) par roulement à billes (9).

Selon une particularité de l'invention, la liaison et l'entraînement entre lesdits plateaux (1 et 6) est réalisée par une courroie (5) ayant une capacité élastique de déformation et d'extension. Dans une mise en oeuvre avantageuse, la courroie est trapézoïdale et elle est conçue avec une certaine élasticité, et la profondeur du contact dans la gorge trapézoïdale compense la variation de longueur de la courroie (5) et permet de maintenir une tension pratiquement constante. Une courroie de transmission de puissance est ainsi commercialisée par la société HUTCHINSON sous la marque FLEXONIC, et présente une configuration striée, le plateau (6) étant profilé alors de manière complémentaire pour assurer l'entraînement.

Le dispositif selon l'invention ainsi décrit est particulièrement avantageux en répondant aux objectifs recherchés.

Ainsi, le basculement naturel dû à la tension de la courroie amène le plateau elliptique, en l'absence de pédalage, à prendre une position qui est à l'horizontale, et ce, grâce à l'utilisation des roues libres qui permettent justement des mouvements relatifs. Lorsqu'une pédale (3a) est à l'horizontale (figure 2), et le plateau elliptique avec le grand axe vertical, la force résultante fournie est maximale, le rapport de transmission et donc la force à fournir sont ainsi maximum et le rendement est moyen.

Lorsque le plateau elliptique (1) est à l'horizontale (figure 3), le rapport de transmission est minimal. L'effort à fournir pour avancer est minimal. Si la pédale (3a) est en position haute, la force résultante fournie est minimale avec un rendement moyen.

Ainsi et selon l'invention, l'utilisation des roues libres (4-7), et en particulier en association avec le plateau elliptique, permet de pré positionner la pédale au démarrage et d'autoriser un démarrage facile et plus simple avec un rendement homogène. Pour le redémarrage, il suffit à l'utilisateur de remonter la pédale (3a) en position haute pour se placer en configuration optimale. Le mouvement est simple, et pour un enfant par exemple, il peut s'effectuer naturellement.

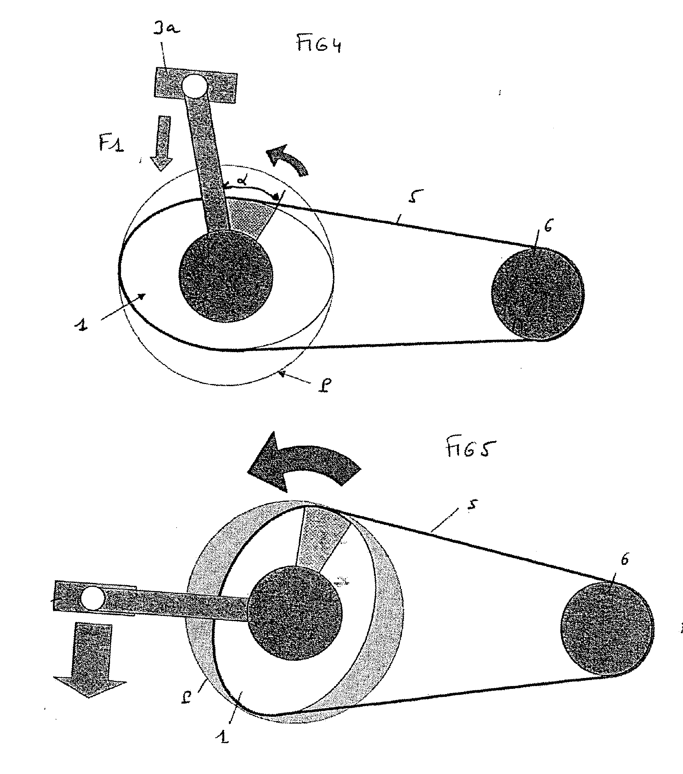

En se référant aux figures 4 à 7, on a illustré figure 4 la position du dispositif en phase de démarrage avec une force (F1) minimum, et une difficulté réduite de pédalage de l'ordre de 15 % due au fait que le petit axe du plateau elliptique est 15 % plus petit que le grand axe qui correspond au diamètre d'un plateau traditionnel. Le plateau traditionnel du cycle a été représenté par (P). Pour la figure 5, on a représenté la rotation du plateau elliptique de un quart de tour avec une force (F2) maximum et une difficulté d'entraînement maximum, la pédale étant à l'horizontale.

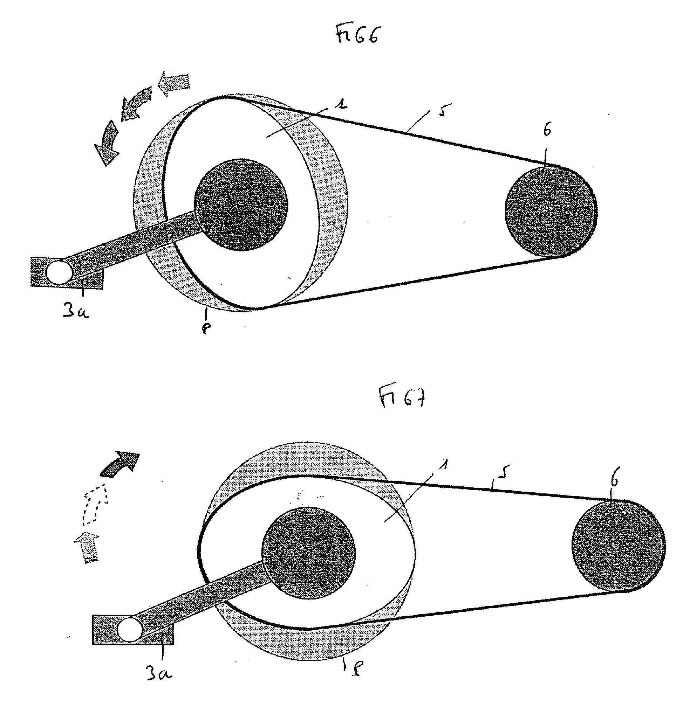

Pour les figures 6 et 7, on est à l'arrêt et grâce à la roue libre avant (4), le plateau (1) revient en position à l'horizontale sans faire tourner le pédalier.

Les avantages ressortent bien de l'invention. On souligne la simplicité du dispositif, l'assistance au démarrage du pédalage qui apporte un grand confort à l'utilisateur. Les applications de l'invention sont nombreuses dans le milieu du cycle en général.

## Revendications

1. Dispositif de transmission de mouvement de pédalage pour le déplacement ou entraînement, du type mettant en oeuvre un plateau elliptique relié au pédalier par un moyen de transmission, est **caractérisé en ce qu'**il comprend en combinaison un plateau (1) elliptique avant du cycle, relié au pédalier (2) par un système de roue libre (4), ce qui permet à l'utilisateur de choisir l'angle d'inclinaison entre les pédales (3a-3b) et le grand axe (AA) du plateau elliptique, un plateau (6) circulaire arrière avec roue libre (7) et une courroie de transmission (5) qui réalise la liaison et l'entraînement entre lesdits plateaux (1 et 6), la courroie (5) ayant une capacité élastique de déformation et d'extension, le dispositif étant agencé pour permettre la mise à niveau automatique du plateau avant elliptique en position à l'horizontale et donc l'équilibre lorsque l'utilisateur cesse de pédaler.

2. Dispositif selon la revendication 1, **caractérisé en ce que** le plateau arrière circulaire (6) est relié au moyeu de roue (8) par un second système de roue libre (7), et **en ce que** le moyeu est relié à la tige transversale (10) par roulement à billes (9).

3. Dispositif selon la revendication 1, **caractérisé en ce que** la courroie dentée est trapézoïdale et est conçue avec une certaine élasticité, et la profondeur du contact dans la gorge trapézoïdale compense la variation de longueur de la courroie (5) et permet de maintenir une tension pratiquement constante.

## Claims

1. Device for the transmission of pedalling motion for travelling or training, of the type that employs an elliptical plate connected to the pedal and gear mechanism by a transmission means **characterized in that** it includes in combination an elliptical front plate (1) of the cycle, connected to the pedal and gear mechanism (2) by a free wheel system (4) which allows the user to choose the angle of inclination between the pedals (3a-3b) and the main axis (AA) of the elliptical plate, a rear circular plate (6) with free wheel (7) and a driving belt (5), which provides the connection and the drive between said plates (1 and 6), the belt (5) having elastic deformation and expansion capability, the device being arranged to allow automatic levelling of the elliptical front plate in the horizontal position and therefore equilibrium when the user stops pedalling.

2. Device as claimed in claim 1, **characterized in that** the circular rear plate (6) is connected to the wheel hub (8) by a second free wheel system (7), and **in that** the hub is connected to the transverse rod (10) by ball bearings (9).

3. Device as claimed in claim 1, **characterized in that** the cogged belt is trapezoid and is designed to have a degree of elasticity, and the depth of contact in the trapezoid groove compensates for the variation in length of the belt (5) and allows the tension to be kept practically constant.

## Patentansprüche

1. Vorrichtung zur Übertragung einer Pedalbewegung zur Fortbewegung oder für das Heimtraining nach Art derer, bei denen ein elliptisches Keilblatt durch ein Übersetzungsmittel mit dem Tretlager verbunden ist, **dadurch gekennzeichnet, dass** sie in Kombination ein vorderes elliptisches Keilblatt (1) des Fahrrades, das durch ein Freilaufsystem (4) mit dem Tretlager (2) verbunden ist, was dem Benutzer erlaubt, den Neigungswinkel zwischen den Pedalen (3a-3b) und der großen Achse (AA) des elliptischen Keilblatts zu wählen, ein kreisförmiges hinteres Keilblatt (6) mit Freilauf (7) und einen Transmissionsriemen (5), der die Verbindung und den Antrieb zwischen den besagten Keilblättern (1 und 6) herstellt, umfasst, wobei der Riemen (5) elastisch verformbar und dehnbar ist, während die Vorrichtung so beschaffen ist, um die automatische Nivellierung des elliptischen vorderen Keilblatts in horizontaler Position und damit das Gleichgewicht zu ermöglichen, wenn der Benutzer mit dem Treten aufhört.

2. Vorrichtung nach Anspruch 1, **dadurch gekennzeichnet, dass** das kreisförmige hintere Keilblatt (6) durch ein zweites Freilaufsystem (7) mit der Radnabe (8) verbunden ist und dass die Nabe durch Kugellager (9) mit der Querstange (10) verbunden ist.

3. Vorrichtung nach Anspruch 1, **dadurch gekennzeichnet, dass** der Zahnriemen trapezförmig und mit einer gewissen Elastizität ausgelegt ist, und dass die Kontakttiefe in der Keilnut die Längenänderung des Riemens (5) ausgleicht und eine praktisch konstante Spannung aufrechterhält.
